# EUROPEAN PATENT SPECIFICATION

(11) **EP 4 345 458 B1**
(45) Date of publication and mention of the grant of the patent: **26.11.2025**
(21) Application number: 23198646.4
(22) Date of filing: 20.09.2023
(51) Int. Cl.: G01N 35/00

(54) **ACCURACY MANAGEMENT METHOD, HOLDING TOOL, AND MEASUREMENT DEVICE**
GENAUIGKEITSVERWALTUNGSVERFAHREN, HALTEWERKZEUG UND MESSVORRICHTUNG
PROCÉDÉ DE GESTION DE PRÉCISION, OUTIL DE MAINTIEN ET DISPOSITIF DE MESURE

(30) Priority: 28.09.2022 JP 2022155530
(43) Date of publication of application: 03.04.2024
(73) Proprietor: ARKRAY, Inc., Kyoto-shi, Kyoto 601-8045 (JP)
(72) Inventor: SEZAKI, Akira, Kyoto, 602-0008 (JP); FUKUMARU, Hajime, Kyoto, 602-0008 (JP); AONO, Takafumi, Kyoto, 602-0008 (JP)
(74) Representative: Dehns

(56) References cited:
- CN-A- 113 866 431
- JP-A- 2015 135 282
- US-A1- 2020 393 476
- US-B2- 9 606 133

## Description

### BACKGROUND

### Technical Field

The present invention relates to an accuracy management method for a measurement device, and a measurement device.

### Related Art

It is necessary for a measurement device that measures a component of blood such as a high-performance liquid chromatography to confirm accuracy of the measurement device at a constant frequency such as, for example, before starting daily measurement. The accuracy management is to perform measurement on a sample liquid of an accuracy management substance, which is a sample whose concentration is known, and compare the measured value with a reference value, which is a known concentration, to confirm the accuracy. A measurer confirms whether or not a measurement instrument returns a correct measurement result, and then measures a specimen of a patient. Examples of the accuracy management substance used for accuracy management include a substance derived from blood. In many cases, the substance, in a multiple-use quantity, is provided in a state of being lyophilized in a container such as a vial. The measurer injects a dissolving liquid into the container to dissolve or dilute the substance, and then uses the accuracy management substance. Such pre-adjustment and dispensing of the accuracy management substance have been manually performed as described in Japanese Patent Application Laid-Open (JP-A) No. 2017-156228.

As described above, complicated work of manually dispensing and storing the dissolved substance has been required in order to use the accuracy management substance obtained by dissolving or diluting the substance once, or multiple times. In addition, since management of an expiration date after dissolution or dilution must depend upon a dissolving date or dilution date, the expiration date has relied on a date directly written on a label of the container or the like. Therefore, errors due to erroneous writing of dates and the like, erroneous reading of handwritten characters, and the like often occur.

JP 2015-135282 A discloses an automatic analyzer that can perform reliable quality control by performing quality control at predetermined intervals. Preparation protocol information is stored in RF tags for each quality control sample, so that preparation and analysis of the quality control sample can be started based on this preparation protocol information. The quality control samples may be freeze-dried and are dissolved before being used in measurements.

CN 113866431 A discloses a quality control method of a sample analysis system in which a quality control material container is provided with an RFID tag.

US 2020/393476 A1 discloses a method to provide control samples for validating a diagnostic test within a laboratory system. The laboratory system comprises an aliquoting device, a storage, a transport system, at least two analyzers, and a control unit. A total number of control sample aliquots and an aliquot volume for each control sample aliquot is determined based on a validation time schedule.

An embodiment of the present invention provides an accuracy management method capable of simply and reliably using an accuracy management substance used for accuracy management of a measurement device without depending on human power, and a measurement device capable of performing accuracy management by the method.

### SUMMARY

A first aspect of the invention provides an accuracy management method for executing accuracy management by using an accuracy management substance in a measurement device that measures a biological specimen. The accuracy management method uses a holding tool, the holding tool comprising: a container that accommodates the accuracy management substance used for accuracy management of the measurement device that measures the biological specimen; a holder that accommodates the container; and an information recording medium in which management information regarding the accuracy management substance is recorded, wherein the information recording medium is provided at one of the holder or the container. The accuracy management method comprises: reading management information regarding the accuracy management substance from the information recording medium; selecting a treatment adapted to (according to/selected in accordance with) the read management information; executing the selected treatment; and updating the management information in the information recording medium according to the executed treatment. The selected treatment includes: a dissolving treatment in which the accuracy management substance in a first state which is an undissolved state is dissolved by injecting a dissolving liquid into the container of the accuracy management substance to obtain the accuracy management substance in a second state which is a dissolved state; a transfer treatment in which the accuracy management substance in the second state is transferred to an inside of the measurement device; a dilution treatment in which the accuracy management substance in the second state transferred to the inside of the measurement device is diluted with a diluent in the measurement device to obtain the accuracy management substance in a third state which is a diluted state, and a measurement treatment in which measurement for accuracy management is performed using the accuracy management substance in the third state. The management information includes a dissolving state and usage information of the accuracy management substance, and the treatment is selected based on at least one of the dissolving state or the usage information.

Accordingly, there is provided a method capable of simply and reliably using an accuracy management substance used for accuracy management of a measurement device without depending on human power, and a measurement device capable of performing accuracy management by the method.

### BRIEF DESCRIPTION OF THE DRAWINGS

Exemplary embodiments will be described in detail based on the following figures, wherein:
Fig. 1 is a front view schematically illustrating a holding tool;
Fig. 2 is a front view schematically illustrating a container of another form;
Fig. 3 is a cross-sectional view schematically illustrating a state of the inside of the container;
Fig. 4 is a functional block diagram schematically illustrating an information recording medium attached to the container;
Fig. 5 is a functional block diagram schematically illustrating a measurement device of an exemplary embodiment;
Fig. 6 is a block diagram schematically illustrating a hardware configuration of a control device;
Fig. 7 is a flowchart illustrating an accuracy management method of an exemplary embodiment;
Fig. 8 is a plan view schematically illustrating a state in which the holding tool of Fig. 1 is set in the measurement device;
Fig. 9 is a plan view schematically illustrating a state in which a reader reads management information from the information recording medium;
Fig. 10 is a plan view schematically illustrating a state in which a nozzle moves to the position of the container;
Fig. 11 is a cross-sectional view schematically illustrating a state in which the nozzle is inserted into the container;
Fig. 12 is a cross-sectional view schematically illustrating a state in which a dissolving liquid is injected into the container;
Fig. 13 is a plan view schematically illustrating a state in which the nozzle moves to an initial position;
Fig. 14 is a cross-sectional view schematically illustrating a state in which an accuracy management substance is dissolved in a dissolving liquid;
Fig. 15 is a cross-sectional view schematically illustrating a state in which the nozzle is inserted into the container;
Fig. 16 is a cross-sectional view schematically illustrating a state in which an intermediate liquid is aspirated out from the container;
Fig. 17 is a cross-sectional view schematically illustrating a state after the intermediate liquid is aspirated out from the container;
Fig. 18 is a cross-sectional view schematically illustrating a state in which the intermediate liquid is introduced into a dilution tank;
Fig. 19 is a cross-sectional view schematically illustrating a state in which the intermediate liquid is diluted with a diluent;
Fig. 20 is a cross-sectional view schematically illustrating a state in which a measurement liquid is aspirated out from the dilution tank;
Fig. 21 is a plan view schematically illustrating a state in which the nozzle moves to the position of the next container; and
Fig. 22 is a plan view schematically illustrating a state in which a writer writes the management information to the information recording medium.

### DETAILED DESCRIPTION

Hereinafter, exemplary embodiments of the present invention will be described with reference to the drawings. Common reference signs in the respective drawings indicate the same parts without any particular description. In addition, each member, article, and device in each drawing are schematically illustrated, and the size and shape do not necessarily accurately reflect each actual member, article, and device.

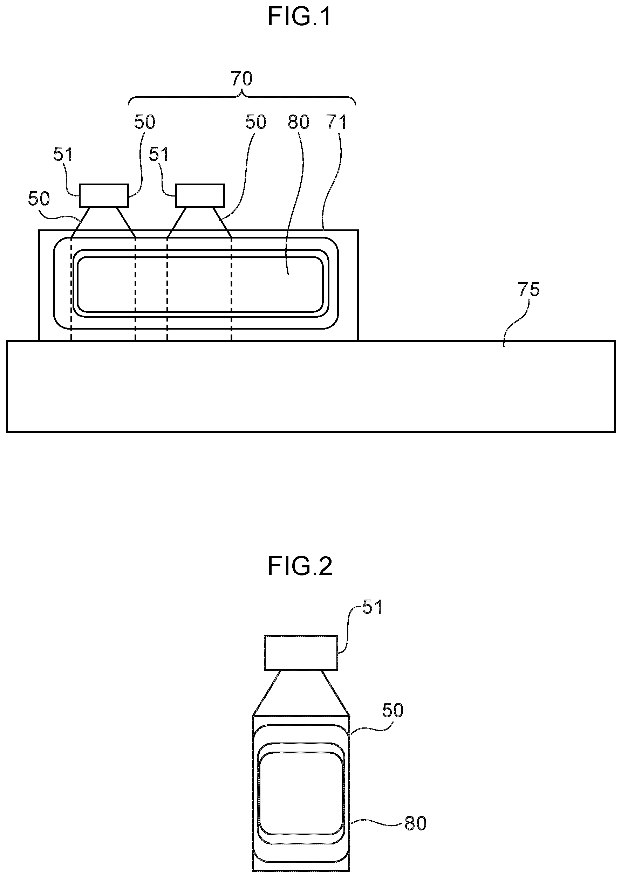

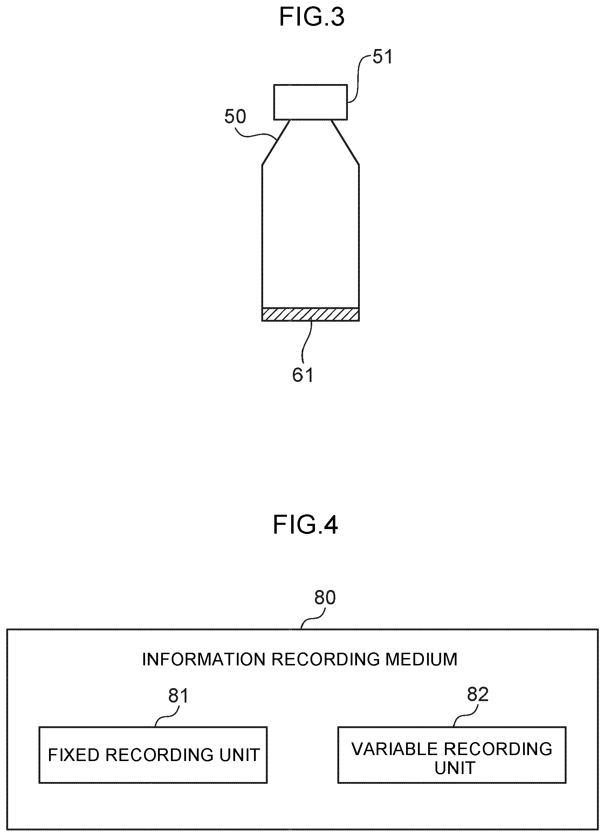

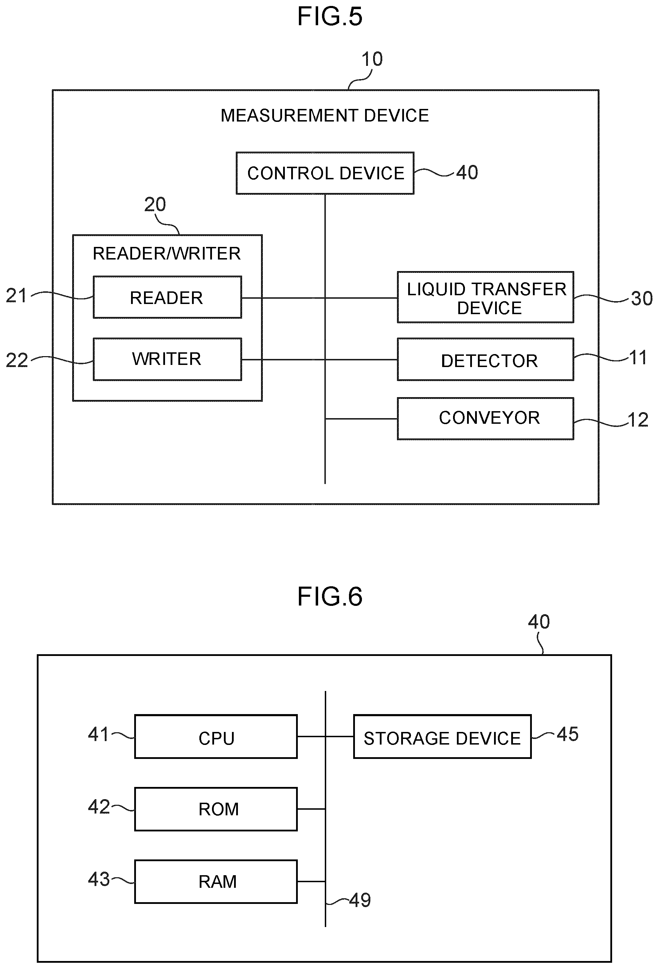

Fig. 1 is a front view schematically illustrating a holding tool 70. Moreover, Fig. 2 is a front view schematically illustrating another form of a container 50. Furthermore, Fig. 3 is a cross-sectional view schematically illustrating a state of the inside of the container 50 accommodated in the holding tool 70. The holding tool 70 includes a container 50 that accommodates an accuracy management substance 61 used for accuracy management for a measurement device 10 (see Fig. 5) that measures a biological specimen, a holder 71 that accommodates the container 50, and an information recording medium 80 that records management information regarding the accuracy management substance 61. The information recording medium 80 is provided at one of the holder 71 (Fig. 1) or the container 50 (Fig. 2). The management information includes fixed information and variable information described later. The holder 71 is box-shaped with an open upper side, and can hold one or more containers 50. The holding tool 70 is placed on a conveying rack 75 in the measurement device 10 (see Fig. 5) described later while holding the container 50, and as a result of which the accuracy management substance 61 is conveyed to the measurement device 10.

Note that the information recording medium 80 may be indirectly attached to the container 50 by being attached to the holder 71 as illustrated in Fig. 1 or may be directly attached to a side surface or the like of the container 50 as illustrated in Fig. 2.

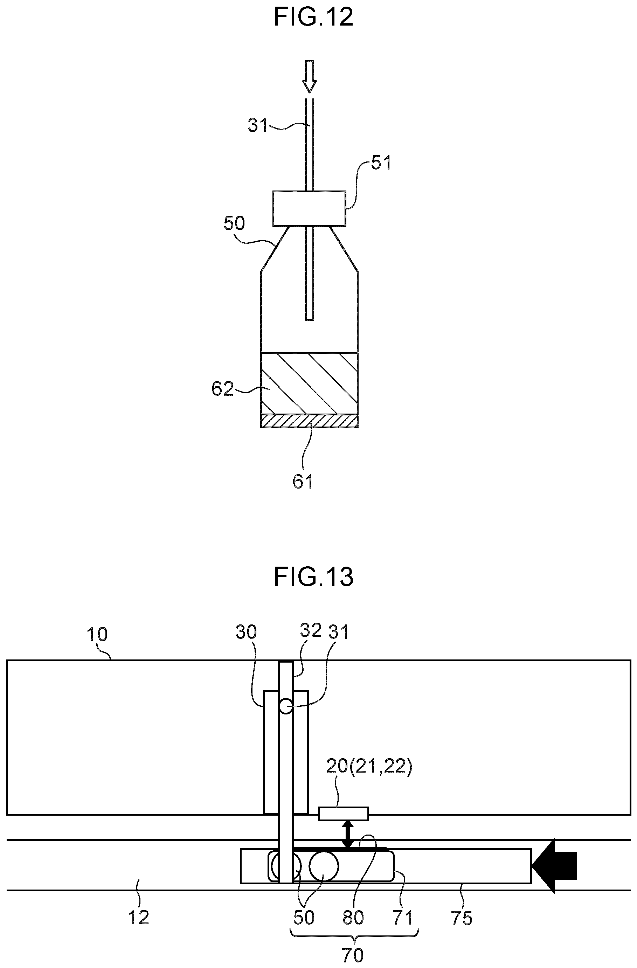

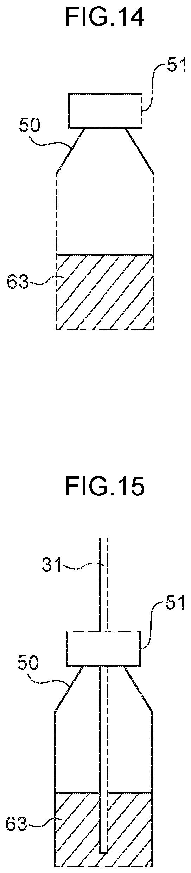

As illustrated in Fig. 3, the container 50 accommodates the accuracy management substance 61 (the accuracy management substance in a first state) in a state of being concentrated to a high concentration such as lyophilized powder, for example. As will be described later, the accuracy management substance 61 is dissolved in a dissolving liquid 62 (see Fig. 12) to generate an intermediate liquid 63 (the accuracy management substance in a second state) (see Fig. 14). The accuracy management substance 61 can be introduced in a state of the intermediate liquid 63 into the measurement device 10 for accuracy management, or can be stored in a state of Fig. 14. A cap 51 that shields the inside of the container 50 from the outside is attached to an upper end of the container 50. Examples of the container 50 can include a so-called vial. The inside of the container 50 is filled with an inert gas such as nitrogen gas in order to prevent deterioration of the accommodated accuracy management substance 61. In the exemplary embodiment, two containers 50 are accommodated in the holding tool 70. For example, the accuracy management substance 61 with a lower concentration and the accuracy management substance 61 with a higher concentration may be stored in the two containers 50 for the same measurement target (for example, hemoglobin A1c). Alternatively, the accuracy management substances 61 for completely different measurement targets may be stored in the two containers 50, respectively. Furthermore, the number of containers 50 accommodated in the holding tool 70 is not limited to two and may be one or three or more according to the type of the measurement target.

Fig. 4 is a functional block diagram schematically illustrating the information recording medium 80 attached to the container 50. The information recording medium 80 may be divided into a fixed recording section 81 that records unchangeable information (hereinafter, referred to as "fixed information") and a variable recording section 82 that records changeable information (hereinafter, referred to as "variable information") as recording areas. Note that the fixed recording section 81 and the variable recording section 82 may be separately formed as physically separate storage media. For example, the fixed recording section 81 may be a non-writable medium, and the variable recording section 82 may be a writable and rewritable medium. Alternatively, the fixed recording section 81 and the variable recording section 82 may be virtually provided using one storage medium.

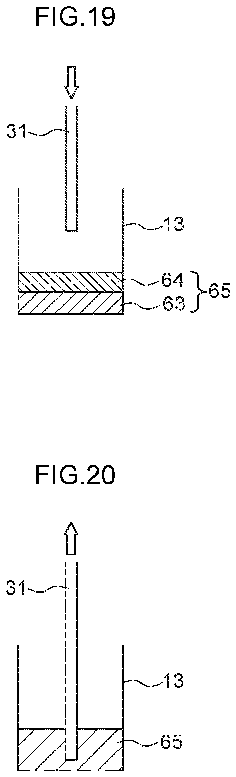

The fixed information regarding the accuracy management substance 61, that is, non-rewritable information, is recorded in the fixed recording section 81. Here, the fixed information is information that is selected when the accuracy management substance 61 is shipped as a product and is not changed depending on a usage status. Examples of the fixed information include a lot number, an expiration date (hereinafter, referred to as a "first expiration date") as a product, a reference value, an available usage count or maximum usage count, a recommended dissolving liquid, and information regarding a recommended diluent. The accuracy management substance 61 is accommodated in the container 50 in a state of powder or the like in a product state, but cannot be used in the measurement device 10 yet in this state. Therefore, the accuracy management substance 61 is dissolved by the dissolving liquid 62 in the container 50 and then further diluted by the diluent 64 in the measurement device 10, and as a result of which the concentration of the accuracy management substance 61 is adjusted to a concentration suitable for measurement. Moreover, more favorable accuracy management processing can be expected by using the recommended dissolving liquid and the recommended diluent. Note that the dissolving liquid 62 and the diluent 64 (see Fig. 19) may be different liquids, but the same liquid may be used therefor.

Note that the reference value described above is a measured value that should be obtained when measuring the diluted accuracy management substance. The accuracy of the measurement device is determined by a difference between an actual measured value obtained by measuring the accuracy management substance and the reference value.

In the variable recording section 82, the variable information such as information that varies according to the use of the accuracy management substance 61 and rewritable information is recorded. The variable information is information that is changed or generated depending on the usage status. For example, the variable information includes a dissolving state, usage information, information to be described by use, etc. The dissolving state indicates whether or not the unused accuracy management substance 61 such as powder contained in the container 50 in a state of a product is dissolved, and includes a dissolved state and an undissolved state. A state in which the accuracy management substance 61 is dissolved is referred to as the dissolved state, and a state in which the accuracy management substance 61 is not dissolved is referred to as the undissolved state. For example, it is possible for the dissolving state to include the dissolving date (i.e., letters, numbers and/or symbols that indicate the date on which the accuracy management substance 61 is dissolved) which means the dissolved state written after dissolving, post-dissolution expiration date information (hereinafter, referred to as a "second expiration date") determined from the dissolving date generated after dissolving, and the like. The usage information is information regarding a use history, and includes information generated by a treatment executed on the accuracy management substance 61 by the measurement device 10 and information changed by the treatment executed on the accuracy management substance 61 by the measurement device 10. Examples of the usage information can include a usage count, a remaining usage count, a used amount, a remaining usage amount, and the like calculated based on an aspiration operation of a nozzle. The information to be described by use may be an initial value. It is also conceivable that the dissolving state is indicated by the usage information. For example, the usage count of 0 in the usage information can indicate the undissolved state, and the usage count of 1 or more can indicate the dissolved state. In this disclosure, the description will be made by using the terms "dissolving state" and "usage information" for understanding.

The measured value of the accuracy management substance obtained by the measurement tends to deviate from the reference value due to a temporal change. Moreover, instead of the reference value, an initial value that is the first measured value after dissolving may be used to determine the accuracy. In this case, this initial value may be treated as the variable information.

The information recording medium 80 is not particularly limited, and may be any means capable of recording information in a rewritable manner, such as magnetic recording means, a rewritable barcode label, or a punched card. However, in view of stable recording of information, it is desirable to use an IC (integrated circuit) tag such as a so-called radio frequency identifier (RFID).

Fig. 5 is a functional block diagram schematically illustrating the measurement device 10 of the exemplary embodiment. The measurement device 10 includes a reader 21 that reads the management information from the information recording medium 80 (see Fig. 1) which is directly or indirectly attached to the container 50 (see Fig. 2) accommodating the accuracy management substance 61 and in which the management information regarding the accuracy management substance 61 is recordable in a rewritable manner, a writer 22 that writes the management information to the information recording medium 80, a liquid transfer device 30 capable of performing liquid injection into the container 50 and liquid aspiration from the container 50, a detector 11 that detects a measurement target component, and a control device 40 that controls the reader 21, the writer 22, the liquid transfer device 30, and the detector 11. Moreover, the control device 40 causes the reader 21 to read the management information from the information recording medium 80. The control device 40 selects the treatment to be executed on the container 50 according to the read management information. As will be described later, in a case in which it is determined based on the read management information that the substance in the container 50 is not dissolved, the control device 40 performs control to put the dissolving liquid into the container 50 by the nozzle of the liquid transfer device 30. In a case in which it is determined based on the read management information that the substance in the container 50 is dissolved and is available, the control device 40 performs control in such a way that the intermediate liquid 63 is aspirated from the container 50 by the nozzle of the liquid transfer device 30 and introduced into the measurement device 10. Then, the measurement device 10 executes dilution treatment described later or another predetermined reaction processing on the intermediate liquid 63 in the measurement device 10, and then causes the detector 11 to detect the measurement target component contained in the intermediate liquid 63. The control device 40 causes the writer 22 to update the management information in the information recording medium 80 according to the treatment executed on the substance in the container 50.

The reader 21 and the writer 22 are devices capable of reading the management information from the information recording medium 80 and writing the management information to the information recording medium 80, respectively, and specifically, are integrally configured as a reader/writer 20. As the reader/writer 20, for example, an IC reader/writer capable of reading and writing information from and to the RFID can be used. Note that the reader 21 and the writer 22 may be configured as separate devices.

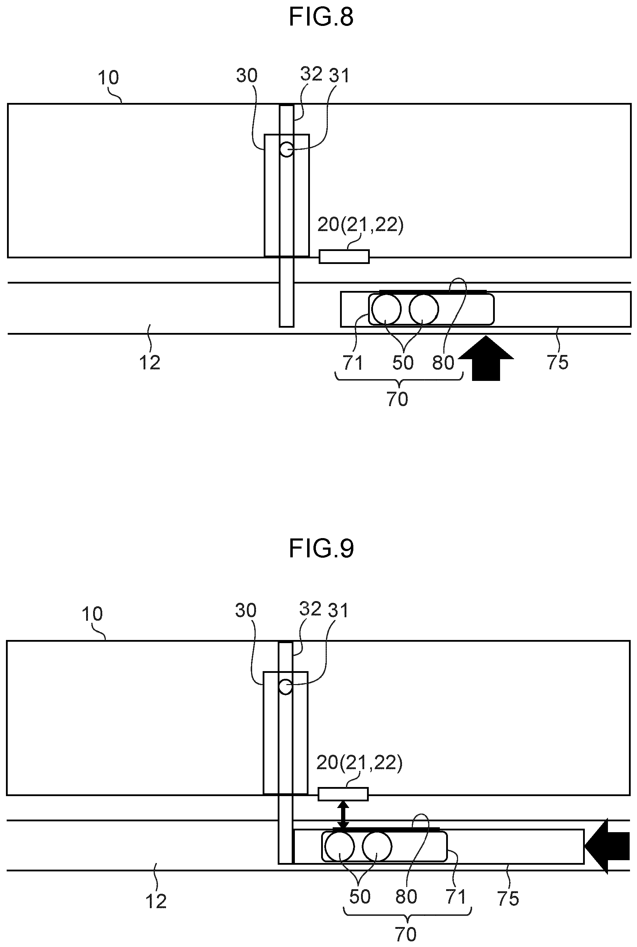

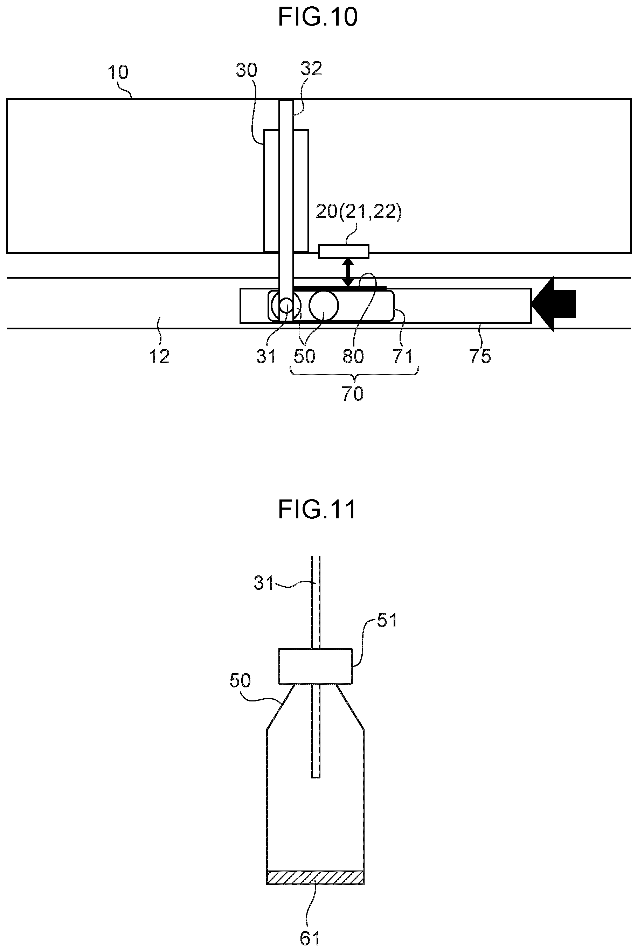

The liquid transfer device 30 is a device capable of injecting the dissolving liquid 62 (see Fig. 12) into the container 50 and aspirating out the intermediate liquid 63 (see Fig. 15) from the container 50. The liquid transfer device 30 can include, for example, a nozzle 31 (Fig. 11) inserted into the container 50, an actuator 32 (see Fig. 8) that moves the nozzle 31, a pump (not illustrated), and the like.

The detector 11 is a device that optically detects, for example, the measurement target component contained in the intermediate liquid 63 aspirated out by the liquid transfer device 30. Specifically, the intermediate liquid 63 aspirated out from the container 50 is further diluted with the diluent 64 in a dilution tank 13 provided inside the measurement device 10 to a concentration suitable for measurement to obtain a measurement liquid 65 (the accuracy management substance 61 in a third state) (see Figs. 19 and 20). The measurement liquid 65 prepared in the dilution tank 13 installed in the measurement device 10 is subjected to predetermined reaction processing such as a reagent reaction or separation in the measurement device 10, if appropriate, and then a numerical value such as absorbance is obtained by the detector 11. The numerical value is calculated by the control device 40, whereby the concentration of the measurement target component contained in the intermediate liquid 63 is specified as the measured value. The accuracy of the measurement is determined by comparing the measured value with the reference value as the fixed information.

The measurement device 10 includes a conveyor 12 that conveys the container 50 to a predetermined position of the measurement device 10 for each rack 75 as illustrated in Fig. 1. The predetermined position may be a place where the liquid in the container 50 can be transferred.

Fig. 6 is a block diagram schematically illustrating a hardware configuration of the control device 40. The control device 40 includes a central processing unit (CPU) 41, a read only memory (ROM) 42, a random access memory (RAM) 43, and a storage device 45. The respective components are communicably connected to each other via a bus 49.

The CPU 41 is a central processing unit, and executes various programs and controls each unit. That is, the CPU 41 reads a program from the ROM 42 or the storage device 45, and executes the program by using the RAM 43 as a work area. The CPU 41 controls the reader/writer 20, the liquid transfer device 30, the detector 11, and the conveyor 12 according to a program recorded in the ROM 42 or the storage device 45.

The ROM 42 stores various programs and various data. The RAM 43 temporarily stores programs or data as a work area. The storage device 45 is configured as a storage by a hard disk drive (HDD), a solid state drive (SSD), or a flash memory, and stores various programs including an operating system and various data. In the exemplary embodiment, the ROM 42 or the storage device 45 stores programs and various data related to control and calculation.

In the control device 40, the CPU 41 in the hardware configuration executes the program to implement an accuracy management method of the exemplary embodiment. The accuracy management method of the exemplary embodiment is an accuracy management method using the information recording medium 80 which is directly or indirectly attached to the container 50 accommodating the accuracy management substance 61 corresponding to the measurement target component and in which the management information regarding the accuracy management substance 61 is recordable in a rewritable manner, the reader 21 that reads the management information from the information recording medium 80, the writer 22 that writes the management information to the information recording medium 80, and the liquid transfer device 30 capable of performing liquid injection into the container 50 and liquid aspiration from the container 50. The accuracy management method is an accuracy management method for executing accuracy management by using the accuracy management substance 61 in the measurement device 10 that measures a biological specimen, and the accuracy management method includes: a reading step of reading the management information regarding the accuracy management substance from the information recording medium 80, a selection step of selecting a treatment adapted to (according to/selected in accordance with) the read management information, an execution step of executing the treatment selected in the selection step, and an update step of updating the management information in the information recording medium 80 according to the treatment executed in the execution step.

As described above, the information recording medium 80 includes, for example, the fixed recording section 81 and the variable recording section 82, the fixed information regarding the accuracy management substance is recorded in the fixed recording section 81, and the variable information that varies with the use of the accuracy management substance 61 is recorded in the variable recording section 82. Moreover, the fixed information includes the first expiration date information of the accuracy management substance 61, and the variable information includes the usage information of the accuracy management substance 61.

Moreover, in the accuracy management method, the management information includes the dissolving state and the usage information of the accuracy management substance 61, and in the selection step, the treatment is selected based on at least one of the dissolving state or the usage information.

Furthermore, in the accuracy management method, the treatment selected in the selection step includes a dissolving treatment in which the accuracy management substance 61 in the first state which is the undissolved state is dissolved by injecting the dissolving liquid 62 into the container 50 of the accuracy management substance 61 to obtain the accuracy management substance 61 in the second state which is the dissolved state, a transfer treatment in which the accuracy management substance 61 in the second state is transferred to the inside of the measurement device 10, a dilution treatment in which the accuracy management substance 61 in the second state transferred to the inside of the measurement device 10 is diluted with the diluent 64 in the measurement device 10 to obtain the accuracy management substance in the third state which is a diluted state, and a measurement treatment in which measurement for accuracy management is performed using the accuracy management substance 61 in the third state.

Note that it is preferable that the accuracy management method of the exemplary embodiment further includes, before the selection step, a determination step of determining the expiration date (specifically, the first expiration date included in the fixed information and the second expiration date included in the variable information) and the usage count included in the usage information, and in the determination step, the execution of the selection step is stopped in a case in which it is determined that the expiration date has passed or the usage count has reached the maximum usage count. That is, the execution of the treatment step is suspended in a case in which the expiration date information indicates that the expiration date has passed or the usage count reached the maximum usage count in the determination step. Moreover, the liquid transfer device 30 performs a liquid injection treatment on the container 50 in the treatment step in a case in which the expiration date information indicates that the expiration date is not passed and the usage information indicates an unused state in the determination step. Furthermore, the liquid transfer device 30 performs a liquid aspiration treatment on the container 50 in the treatment step in a case in which the expiration date information indicates that the expiration date is not passed and the usage count is less than the maximum usage count in the determination step.

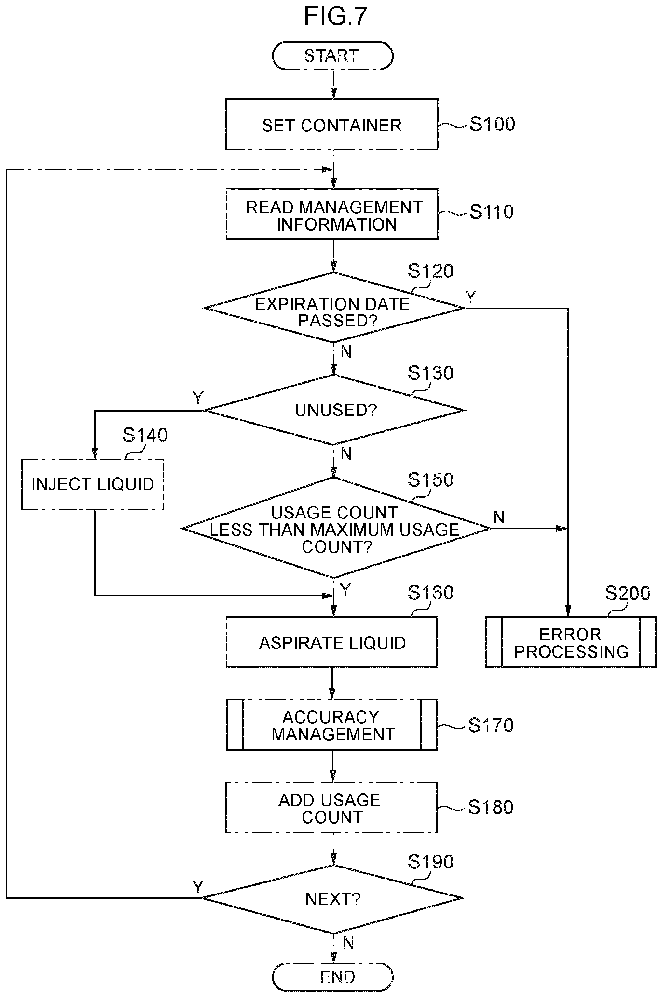

Fig. 7 is a flowchart illustrating the accuracy management method of the exemplary embodiment. Hereinafter, an example of the accuracy management method of the exemplary embodiment will be specifically described with reference to the flowchart and Figs. 8 to 22.

Fig. 8 is a plan view schematically illustrating a state in which the holding tool 70 of Fig. 1 is set in the measurement device. The conveyor 12 that conveys the rack 75 on which the holding tool 70 is placed (to the left in the drawing) is provided in the measurement device 10. The actuator 32 of the liquid transfer device 30 is positioned above a position where the accuracy management substance 61 is collected in the middle of the conveyor 12. The nozzle 31 of the liquid transfer device 30 is movable along the actuator 32 in a direction perpendicular to a longitudinal direction of the conveyor 12. Moreover, the reader/writer 20 having both the functions of the reader 21 and the writer 22 is mounted on a side of the measurement device 10 that faces the conveyor 12, upstream of the collection position. The holding tool 70 that accommodates the two containers 50 is placed on the rack 75 in such a way that the information recording medium 80 faces the reader/writer 20. In this state, the container 50 is set in the measurement device 10 together with the rack 75 at a step of S100.

Fig. 9 is a plan view schematically illustrating a state in which the reader reads the management information from the information recording medium. When the conveyor 12 advances the rack 75, and the information recording medium 80 reaches a position where bidirectional communication with the reader/writer 20 is possible, the rack 75 temporarily stops. In this state, the reader 21 reads the management information from the information recording medium 80 in a reading step of S110. The reading and writing of the information can be performed when passing through the reader/writer 20 without temporarily stopping the rack 75.

Next, the control device 40 determines whether or not the expiration date included in the management information has passed in a determination step of S120. In a case in which affirmative determination is made, that is, in a case in which the expiration date of the accuracy management substance 61 has passed, the subsequent treatment step is suspended, and the processing proceeds to an error processing step of S200. Details of the error processing step are omitted in this disclosure.

On the other hand, in a case in which it is determined in the step of S120 that the expiration date (the first expiration date and the second expiration date) of the accuracy management substance 61 is not passed, the processing proceeds to a determination step of S130. In the determination step of S130, it is possible to determine whether or not the accuracy management substance 61 is unused from the usage count as the variable information recorded in the variable recording section 82 among the management information. In a case in which negative determination is made, that is, in a case in which the accuracy management substance 61 was used at least once, a determination step of S150 is started. In the determination step of S150, it is determined from the usage count information whether or not the usage count of the accuracy management substance 61 is less than the maximum usage count. In a case in which negative determination is made, that is, in a case in which the usage count of the accuracy management substance 61 has reached the maximum usage count, the subsequent treatment step is suspended, and the processing proceeds to the error processing step of S200. In this example, although the determination as to whether or not the accuracy management substance is unused is exemplified with the usage count, the determination can be made not only with the usage count but also with the presence or absence of the second expiration date which is the expiration date after dissolving, the presence or absence of the dissolving date, or a combination thereof. Moreover, an order before and after each determination step can also be appropriately changed according to the situation.

On the other hand, in a case in which it is determined in the determination step of S130 described above that the accuracy management substance is unused (for example, the usage count is 0), the processing proceeds to a treatment step of S140, and the liquid is injected into the container 50. That is, when the leading container 50 reaches the collection position, the nozzle 31 moves to the position of the container 50 by the actuator 32 as illustrated in the plan view of Fig. 10. In this state, a tip of the nozzle 31 pierces the cap 51 and enters the inside of the container 50 as illustrated in Fig. 11. Then, a predetermined amount of dissolving liquid 62 is injected into the container 50 from the nozzle 31 as illustrated in Fig. 12. Next, when the nozzle 31 is once again returned to an initial position as illustrated in Fig. 13, for example, vibration is applied to the rack 75, and the accuracy management substance 61 is dissolved in the dissolving liquid 62 as illustrated in Fig. 14, and as a result of which the intermediate liquid 63 is prepared in the container 50. As means for dissolving, it is also conceivable to repeat aspiration and discharge in addition to the application of the vibration described above.

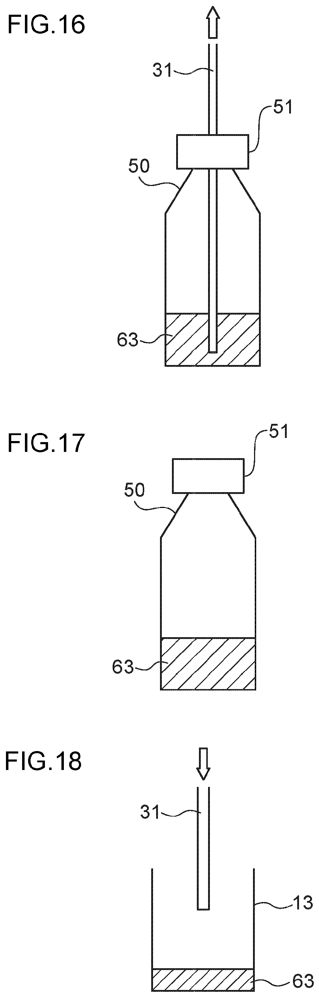

Then, the intermediate liquid 63 as a liquid is aspirated from the container 50 in a treatment step of S160. That is, the nozzle 31 moves to the position of the container as illustrated in Fig. 10, and the tip of the nozzle 31 enters the inside of the container 50 as illustrated in Fig. 15. Then, after the nozzle 31 aspirates a predetermined amount of intermediate liquid 63 as illustrated in Fig. 16, the nozzle 31 is pulled out from the container as illustrated in Fig. 17. The nozzle 31 that has aspirated the intermediate liquid 63 moves to the initial position as illustrated in Fig. 13. In this state, an accuracy management step of S170 performed inside the measurement device 10 starts.

In a case in which it is determined in the determination step of S150 described above that the usage count of the accuracy management substance 61 is less than the maximum usage count, the nozzle 31 aspirates the intermediate liquid 63 as illustrated in Figs. 15 to 17 in the treatment step of S160 as described above.

In the accuracy management step of S170, the intermediate liquid 63 aspirated by the nozzle 31 is introduced into the dilution tank 13 installed inside the measurement device 10 as illustrated in Fig. 18. Next, the intermediate liquid 63 is diluted with the diluent 64 in the dilution tank 13 installed in the measurement device 10 to obtain the measurement liquid 65 having a concentration suitable for measurement as illustrated in Fig. 19. Then, the measurement liquid 65 which is the diluted accuracy management substance 61 prepared in the dilution tank inside the measurement device 10 is aspirated out from the dilution tank 13 as illustrated in Fig. 20, subjected to the predetermined reaction processing such as the reagent reaction or separation processing if appropriate inside the measurement device 10, and then is moved to the detector 11 to be subjected to measurement. The concentration of the measurement target component is specified as the measured value by the control device 40 calculating the numerical value acquired by the measurement. Note that in the accuracy management step, in a case in which the measured value such as the concentration of the accuracy management substance 61 is within a predetermined range, the processing proceeds to specimen measurement. On the other hand, in a case in which the measured value is out of the predetermined range, a necessary treatment such as calibration work is executed on the measurement device 10. Details thereof are omitted in the disclosure.

Next, in an update step of S180, bidirectional communication is performed again between the reader/writer 20 and the information recording medium 80 as illustrated in Fig. 13, and the usage count is added to the usage count recorded in the variable recording section by the writer 22.

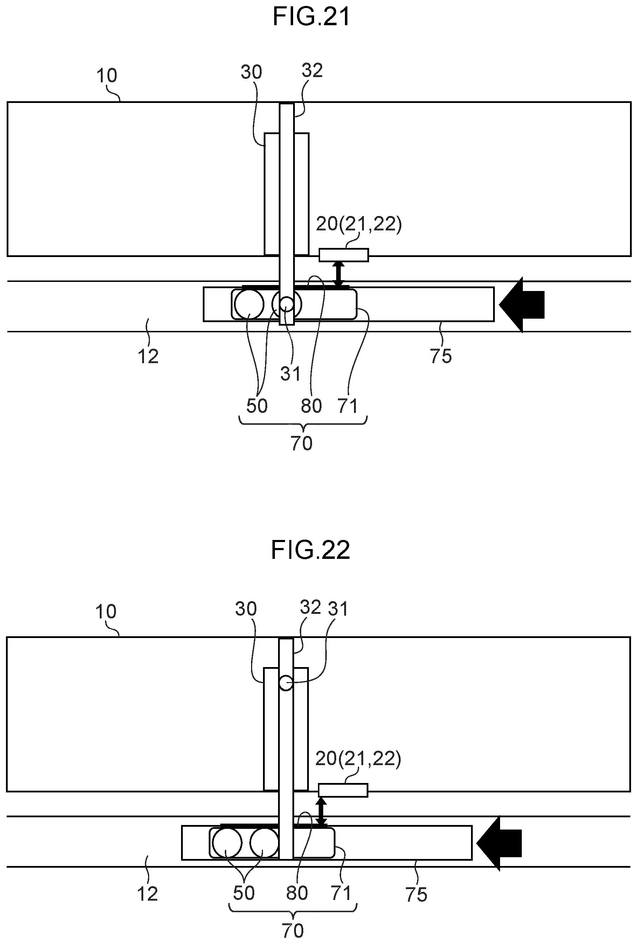

Then, it is determined in a step of S190 whether or not there is a next accuracy management substance 61. In a case in which it is determined that there is a next accuracy management substance 61, the conveyor 12 further advances the rack 75, and the rack 75 stops again when the next container 50 reaches the collection position as illustrated in Fig. 21. Then, the management information regarding the next accuracy management substance 61 is read between the reader/writer 20 and the information recording medium 80, and the above-described steps are repeated.

Then, after the accuracy management step (S170) by the next accuracy management substance 61, the conveyor 12 further advances the rack as illustrated in Fig. 22, and the usage information as the usage count of the next accuracy management substance 61 is recorded in the variable recording section of the information recording medium 80 by the writer. Then, in a case in which it is determined in the step of S190 that there is no next accuracy management substance 61, the accuracy management method of the exemplary embodiment ends. The used accuracy management substance 61 is stored together with the holding tool 70 by an appropriate management method such as refrigeration until the next use opportunity.

The accuracy management substance 61 is dissolved once in the dissolving liquid 62 in the container 50 and then stored in the container 50 as the intermediate liquid 63, and can be used for accuracy management plural times. For example, the accuracy management substance 61 may be used in one measurement device plural times, or the accuracy management substance 61 may be commonly used in plural measurement devices. In a case where the accuracy management substance 61 is dissolved and used by the first measurement device 10 in the case of being commonly used by the plural measurement devices 10, the container 50 of the accuracy management substance 61 is moved to the next measurement device 10 in a state in which the usage count is recorded as 1 in the information recording medium 80. Then, in the next measurement device 10, the accuracy management substance 61 is used for accuracy management without being required to be newly dissolved in the dissolving liquid 62 in a state where the usage count is carried over.

Hereinafter, an example in which the holding tool 70 accommodating the accuracy management substance 61 is commonly used in plural measurement devices 10 will be described. As in the step of S190, at a time point when accuracy management processing in one measurement device 10 (hereinafter, referred to as a "first measurement device") is completed, the fixed information of the accuracy management substance 61 recorded in the information recording medium 80 attached to the holding tool 70 is not changed, but the variable information is updated by a treatment executed in the first measurement device. For example, the dissolving date indicating a date on which dissolving is performed and the second expiration date which is an expiration date after dissolving are written to the information recording medium 80, and "1" which is a parameter indicating that the first use is completed is recorded as the usage count as the usage information.

On the other hand, the holding tool 70 in which the information was updated may be stored together with the container 50 and wait until being used by the first measurement device or another measurement device (hereinafter, referred to as a "second measurement device"). Moreover, the holding tool 70 can be conveyed to the second measurement device by a conveying mechanism. When the holding tool 70 after being used in the first measurement device is conveyed to the second measurement device and used, the information regarding the accuracy management substance 61 is recorded in the holding tool 70, and thus, the accuracy management substance 61 can be used without any problem even in the second measurement device that does not recognize the information regarding the accuracy management substance 61 in advance.

For example, when the holding tool 70 accommodating the accuracy management substance 61 is set in the second measurement device in the step of S100, the processing proceeds to the step of S110, the control device 40 of the second measurement device reads the management information, and then, in a case in which it is determined in the step of S120 that the first expiration date and the second expiration date are not passed, the processing proceeds to the step of S130. On the other hand, in a case in which it is determined that either the first expiration date or the second expiration date has passed, the processing ends.

Moreover, in a case in which the second expiration date indicating the dissolved state is recorded in the information recording medium 80, it is determined in the step of S130 that the accuracy management substance is in the dissolved state. Next, in a case in which it is determined in the step of S150 that the usage count of " 1 " is less than the maximum usage count recorded as the fixed information, the processing proceeds to the step illustrated in S160. In this step, the intermediate liquid is aspirated and supplied into the measurement device 10, and subjected to the dilution treatment, reagent processing, separation processing, and the like in the measurement device 10, and then a measured value for accuracy management is obtained. Finally, in the step of S180, the usage count is added to "2", so that the information recorded in the information recording medium 80 is updated.

As described above, according to the exemplary embodiment, since no human work is required for determining whether or not the accuracy management substance 61 can be used, dissolving the accuracy management substance 61, aspirating out the accuracy management substance 61, and recording the usage count, it is possible to reduce work related to accuracy management. Moreover, since information regarding a use history is updated in the holding tool 70 accommodating the container 50 of the accuracy management substance 61 each time the accuracy management substance 61 is used for the treatment, even in a case in which the holding tool 70 accommodating the container 50 of the accuracy management substance 61 is commonly used in plural measurement devices 10, the measurement device 10 can automatically recognize a usage status or the like of the accuracy management substance 61 recorded in the holding tool 70. As a result, the accuracy management substance 61 can be smoothly used in common among plural measurement devices 10.

### INDUSTRIAL APPLICABILITY

The present invention can be used for accuracy management of a measurement device using an accuracy management substance.

## Claims

1. An accuracy management method for executing accuracy management by using an accuracy management substance (61) in a measurement device (10) that measures a biological specimen,
wherein the accuracy management method uses a holding tool (70), the holding tool (70) comprising:
a container (50) that accommodates the accuracy management substance (61) used for accuracy management of the measurement device (10) that measures the biological specimen;
a holder (71) that accommodates the container (50); and
an information recording medium (80) in which management information regarding the accuracy management substance (61) is recorded,
wherein the information recording medium (80) is provided at one of the holder (71) or the container (50),
the accuracy management method comprising:
reading the management information regarding the accuracy management substance (61) from the information recording medium (80);
selecting a treatment adapted to the read management information;
executing the selected treatment; and
updating the management information in the information recording medium (80) according to the executed treatment,
wherein the selected treatment includes:
a dissolving treatment in which the accuracy management substance (61) in a first state which is an undissolved state is dissolved by injecting a dissolving liquid (62) into the container (50) of the accuracy management substance (61) to obtain the accuracy management substance (61) in a second state which is a dissolved state,
a transfer treatment in which the accuracy management substance (61) in the second state is transferred to an inside of the measurement device (10),
a dilution treatment in which the accuracy management substance (61) in the second state transferred to the inside of the measurement device (10) is diluted with a diluent (64) in the measurement device (10) to obtain the accuracy management substance (61) in a third state which is a diluted state, and
a measurement treatment in which measurement for accuracy management is performed using the accuracy management substance (61) in the third state,
wherein:
the management information includes a dissolving state and usage information of the accuracy management substance (61), and
the treatment is selected based on at least one of the dissolving state or the usage information.

2. The accuracy management method according claim 1, further comprising, before selecting the treatment, determining an expiration date and usage information included in the management information,
wherein the selecting is stopped in a case in which it is determined that the expiration date has passed or a usage count in the usage information has reached a maximum usage count.

3. The accuracy management method according to claim 2, wherein the expiration date includes a first expiration date of the accuracy management substance (61) in the first state and a second expiration date of the accuracy management substance (61) in the second state.

4. A measurement device (10) that is configured to execute the accuracy management method according to any of claims 1 to 3 by using the holding tool (70),
wherein the management information includes variable information of the accuracy management substance, and
the variable information is updated according to a treatment executed on the accuracy management substance (61) by the measurement device (10),
the measurement device (10) including:
a reader (21) configured to read the management information from the information recording medium (80),
a writer (22) configured to write the management information to the information recording medium (80),
a liquid transfer device (30) capable of performing liquid injection into the container (50) and liquid aspiration from the container (50),
a detector (11) configured to detect a measurement target component, and
a control device (40) configured to control the reader (21), the writer (22), the liquid transfer device (30), and the detector (11).

5. The measurement device (10) according to claim 4, wherein:
the information recording medium (80) includes a fixed recording section (81) that records fixed information that is unchangeable, and a variable recording section (82) that records the variable information, and
the variable information includes information generated by the treatment executed on the accuracy management substance (61) by the measurement device (10) and information changed by the treatment executed on the accuracy management substance (61) by the measurement device (10).

6. The measurement device (10) according to claim 4 or 5, wherein the variable information includes a dissolving state and usage information of the accuracy management substance (61).

## Patentansprüche

1. Genauigkeitsverwaltungsverfahren zum Ausführen von Genauigkeitsverwaltung durch Verwenden einer Genauigkeitsverwaltungssubstanz (61) in einer Messvorrichtung (10), die eine biologische Probe misst,
wobei das Genauigkeitsverwaltungsverfahren ein Haltewerkzeug (70) verwendet, das Haltewerkzeug (70) umfassend:
einen Behälter (50), der die Genauigkeitsverwaltungssubstanz (61) aufnimmt, die zur Genauigkeitsverwaltung der Messvorrichtung (10), die die biologische Probe misst, verwendet wird;
einen Halter (71), der den Behälter (50) aufnimmt; und
ein Informationsaufzeichnungsmedium (80), in dem Verwaltungsinformationen bezüglich der Genauigkeitsverwaltungssubstanz (61) aufgezeichnet sind,
wobei das Informationsaufzeichnungsmedium (80) entweder an dem Halter (71) oder dem Behälter (50) bereitgestellt ist,
das Genauigkeitsverwaltungsverfahren umfassend:
Lesen der Verwaltungsinformationen bezüglich der Genauigkeitsverwaltungssubstanz (61) aus dem Informationsaufzeichnungsmedium (80);
Auswählen einer Behandlung, die an die gelesenen Verwaltungsinformationen angepasst ist;
Ausführen der ausgewählten Behandlung; und
Aktualisieren der Verwaltungsinformationen in dem Informationsaufzeichnungsmedium (80) entsprechend der ausgeführten Behandlung,
wobei die ausgewählte Behandlung einschließt:
eine Auflösungsbehandlung, bei der die Genauigkeitsverwaltungssubstanz (61) in einem ersten Zustand, der ein ungelöster Zustand ist, durch Einspritzen einer Auflösungsflüssigkeit (62) in den Behälter (50) der Genauigkeitsverwaltungssubstanz (61) aufgelöst wird, um die Genauigkeitsverwaltungssubstanz (61) in einem zweiten Zustand, der ein gelöster Zustand ist, zu erhalten,
eine Überführungsbehandlung, bei der die Genauigkeitsverwaltungssubstanz (61) im zweiten Zustand in das Innere der Messvorrichtung (10) überführt wird,
eine Verdünnungsbehandlung, bei der die im zweiten Zustand in das Innere der Messvorrichtung (10) überführte Genauigkeitsverwaltungssubstanz (61) mit einem Verdünnungsmittel (64) in der Messvorrichtung (10) verdünnt wird, um die Genauigkeitsverwaltungssubstanz (61) in einem dritten Zustand, der ein verdünnter Zustand ist, zu erhalten, und
eine Messbehandlung, bei der eine Messung zur Genauigkeitsverwaltung unter Verwendung der Genauigkeitsverwaltungssubstanz (61) im dritten Zustand durchgeführt wird,
wobei:
die Verwaltungsinformationen einen Auflösungszustand und Verwendungsinformationen der Genauigkeitsverwaltungssubstanz (61) einschließen, und
die Behandlung basierend auf mindestens einem von dem Auflösungszustand oder den Verwendungsinformationen ausgewählt wird.

2. Genauigkeitsverwaltungsverfahren nach Anspruch 1, weiter umfassend, vor dem Auswählen der Behandlung, Bestimmen eines Verfallsdatums und von Verwendungsinformationen, die in den Verwaltungsinformationen eingeschlossen sind,
wobei das Auswählen in einem Fall gestoppt wird, in dem bestimmt wird, dass das Verfallsdatum überschritten wurde oder eine Verwendungsanzahl in den Verwendungsinformationen eine maximale Verwendungsanzahl erreicht hat.

3. Genauigkeitsverwaltungsverfahren nach Anspruch 2, wobei das Verfallsdatum ein erstes Verfallsdatum der Genauigkeitsverwaltungssubstanz (61) im ersten Zustand und ein zweites Verfallsdatum der Genauigkeitsverwaltungssubstanz (61) im zweiten Zustand einschließt.

4. Messvorrichtung (10), die dazu konfiguriert ist, das Genauigkeitsverwaltungsverfahren nach einem der Ansprüche 1 bis 3 durch Verwenden des Haltewerkzeugs (70) auszuführen,
wobei die Verwaltungsinformationen variable Informationen der Genauigkeitsverwaltungssubstanz einschließen, und
die variablen Informationen entsprechend einer Behandlung, die von der Messvorrichtung (10) an der Genauigkeitsverwaltungssubstanz (61) durchgeführt wird, aktualisiert werden,
die Messvorrichtung (10) einschließend:
einen Leser (21), der dazu konfiguriert ist, die Verwaltungsinformationen aus dem Informationsaufzeichnungsmedium (80) zu lesen,
einen Schreiber (22), der dazu konfiguriert ist, die Verwaltungsinformationen auf das Informationsaufzeichnungsmedium (80) zu schreiben,
eine Flüssigkeitsüberführungsvorrichtung (30), die in der Lage ist, das Einspritzen von Flüssigkeit in den Behälter (50) und das Ansaugen von Flüssigkeit aus dem Behälter (50) durchzuführen,
einen Detektor (11), der dazu konfiguriert ist, eine Messzielkomponente zu erfassen, und
eine Steuervorrichtung (40), die dazu konfiguriert ist, den Leser (21), den Schreiber (22), die Flüssigkeitsüberführungsvorrichtung (30) und den Detektor (11) zu steuern.

5. Messvorrichtung (10) nach Anspruch 4, wobei:
das Informationsaufzeichnungsmedium (80) einen festen Aufzeichnungsabschnitt (81), der feste Informationen aufzeichnet, die nicht veränderbar sind, und einen variablen Aufzeichnungsabschnitt (82), der die variablen Informationen aufzeichnet, einschließt, und
die variablen Informationen Informationen, die durch die Behandlung erzeugt werden, die von der Messvorrichtung (10) an der Genauigkeitsverwaltungssubstanz (61) durchgeführt wird, und Informationen, die durch die Behandlung verändert werden, die von der Messvorrichtung (10) an der Genauigkeitsverwaltungssubstanz (61) durchgeführt wird, einschließen.

6. Messvorrichtung (10) nach Anspruch 4 oder 5, wobei die variablen Informationen einen Auflösungszustand und Verwendungsinformationen der Genauigkeitsverwaltungssubstanz (61) einschließen.

## Revendications

1. Procédé de gestion de précision pour exécuter une gestion de précision en utilisant une substance de gestion de précision (61) dans un dispositif de mesure (10) qui mesure un échantillon biologique,
dans lequel le procédé de gestion de précision utilise un outil de maintien (70), l'outil de maintien (70) comprenant :
un récipient (50) qui loge la substance de gestion de précision (61) utilisée pour la gestion de précision du dispositif de mesure (10) qui mesure l'échantillon biologique ;
un élément de maintien (71) qui loge le récipient (50) ; et
un support d'enregistrement d'informations (80) dans lequel sont enregistrées des informations de gestion concernant la substance de gestion de précision (61),
dans lequel le support d'enregistrement d'informations (80) est disposé au niveau de l'un parmi l'élément de maintien (71) ou le récipient (50),
le procédé de gestion de précision comprenant :
la lecture des informations de gestion concernant la substance de gestion de précision (61) à partir du support d'enregistrement d'informations (80) ;
la sélection d'un traitement adapté aux informations de gestion lues ;
l'exécution du traitement sélectionné ; et
la mise à jour des informations de gestion dans le support d'enregistrement d'informations (80) en fonction du traitement exécuté,
dans lequel le traitement sélectionné inclut :
un traitement de dissolution dans lequel la substance de gestion de précision (61) dans un premier état qui est un état non dissous est dissoute par injection d'un liquide de dissolution (62) dans le récipient (50) de la substance de gestion de précision (61) pour obtenir la substance de gestion de précision (61) dans un deuxième état qui est un état dissous,
un traitement de transfert dans lequel la substance de gestion de précision (61) dans le deuxième état est transférée vers un intérieur du dispositif de mesure (10),
un traitement de dilution dans lequel la substance de gestion de précision (61) dans le deuxième état transféré à l'intérieur du dispositif de mesure (10) est diluée avec un diluant (64) dans le dispositif de mesure (10) pour obtenir la substance de gestion de précision (61) dans un troisième état qui est un état dilué, et
un traitement de mesure dans lequel une mesure de gestion de précision est mise en œuvre en utilisant la substance de gestion de précision (61) dans le troisième état,
dans lequel :
les informations de gestion incluent un état de dissolution et des informations d'utilisation de la substance de gestion de précision (61), et
le traitement est sélectionné sur la base d'au moins l'un parmi l'état de dissolution ou les informations d'utilisation.

2. Procédé de gestion de précision selon la revendication 1, comprenant en outre, avant la sélection du traitement, la détermination d'une date d'expiration et d'informations d'utilisation incluses dans les informations de gestion,
dans lequel la sélection est arrêtée dans un cas où il est déterminé que la date d'expiration est dépassée ou qu'un nombre d'utilisations dans les informations d'utilisation a atteint un nombre d'utilisations maximal.

3. Procédé de gestion de précision selon la revendication 2, dans lequel la date d'expiration inclut une première date d'expiration de la substance de gestion de précision (61) dans le premier état et une seconde date d'expiration de la substance de gestion de précision (61) dans le deuxième état.

4. Dispositif de mesure (10) qui est configuré pour exécuter le procédé de gestion de précision selon l'une quelconque des revendications 1 à 3 en utilisant l'outil de maintien (70),
dans lequel les informations de gestion incluent des informations variables de la substance de gestion de précision, et
les informations variables sont mises à jour en fonction d'un traitement exécuté sur la substance de gestion de précision (61) par le dispositif de mesure (10),
le dispositif de mesure (10) incluant :
une unité de lecture (21) configurée pour lire les informations de gestion à partir du support d'enregistrement d'informations (80),
une unité d'écriture (22) configurée pour écrire les informations de gestion sur le support d'enregistrement d'informations (80),
un dispositif de transfert de liquide (30) apte à mettre en œuvre une injection de liquide dans le récipient (50) et une aspiration de liquide depuis le récipient (50),
un détecteur (11) configuré pour détecter un composant cible de mesure, et
un dispositif de commande (40) configuré pour commander l'unité de lecture (21), l'unité d'écriture (22), le dispositif de transfert de liquide (30), et le détecteur (11).

5. Dispositif de mesure (10) selon la revendication 4, dans lequel :
le support d'enregistrement d'informations (80) inclut une section d'enregistrement fixe (81) qui enregistre des informations fixes qui ne sont pas modifiables, et une section d'enregistrement variable (82) qui enregistre les informations variables, et
les informations variables incluent des informations générées par le traitement exécuté sur la substance de gestion de précision (61) par le dispositif de mesure (10) et des informations modifiées par le traitement exécuté sur la substance de gestion de précision (61) par le dispositif de mesure (10).

6. Dispositif de mesure (10) selon la revendication 4 ou 5, dans lequel les informations variables incluent un état de dissolution et des informations d'utilisation de la substance de gestion de précision (61).
